Europäisches Patentamt

European Patent Office

Office européen des brevets

(11) Publication number: **0 061 160**
**B1**

## EUROPEAN PATENT SPECIFICATION

(45) Date of publication of patent specification: **25.09.85**

(51) Int. Cl.⁴: **C 08 L 9/02, C 08 K 5/59**

(21) Application number: **82102239.9**

(22) Date of filing: **18.03.82**

(54) Stabilized nitrile polymer.

(30) Priority: **25.03.81 CA 373882**

(43) Date of publication of application:
**29.09.82 Bulletin 82/39**

(45) Publication of the grant of the patent:
**25.09.85 Bulletin 85/39**

(84) Designated Contracting States:
**BE DE FR GB NL**

(56) References cited:
**FR-A-2 089 545**
**GB-A-1 227 719**
**US-A-2 581 910**
**US-A-2 581 911**

**J.V.DEL GATTO: "Materials and compounding ingredients for rubber", 1970, Rubber Automotive Publications, NEW YORK (US), p. 110**
**Encyclopedia of Polymer Science and Technology Vol. 12 page 764 (Interscience 1971)**

(73) Proprietor: **POLYSAR LIMITED**
**Sarnia Ontario N7T 7M2 (CA)**

(72) Inventor: **Bley, John William Franciscus**
**1938 Blackwell Side Road**
**Sarnia Ontario (CA)**

(74) Representative: **Deufel, Paul, Dr. et al**
**Patentanwälte Müller-Boré, Deufel, Schön, Hertel, Lewald, Otto Isartorplatz 6 Postfach 26 02 47**
**D-8000 München 26 (DE)**

Courier Press, Leamington Spa, England.

# 0 061 160

## Description

### Field of the invention

This invention is directed to rubbery nitrile polymers containing improved stabilization systems making the nitrile polymers especially suitable for blending with polyvinyl chloride and/or acrylonitrile-butadiene-styrene polymers.

### Prior art

Due to the presence of unsaturation in nitrile polymers, that is copolymers of butadiene and acrylonitrile and optionally also containing crosslinking monomers such as divinylbenzene, it is well known in the art that these polymers must be stabilized against oxidation and the action of heat by the incorporation therein of suitable antioxiduents or stabilizers. Phenolic compounds, amine-containing compounds and organo-phosphite compounds have been used, alone or in various combinations, in the prior art to provide the necessary stabilization. Certain such combinations have proven to be suitable for general use in nitrile polymers. The cross-linked nitrile polymers, especially those containing divinylbenzene as the crosslinking monomer, are frequently used for blending with thermoplastics such as polyvinyl chloride (PVC) and/or acrylonitrile-butadiene-styrene polymers (ABS), and the high temperatures and mixing conditions encountered in such blending require special stabilization of the nitrile polymer to prevent the occurrence of crosslinking and/or excessive degradation of the nitrile polymer during the blending operation. U.S. Patent 3,661,825 teaches the stabilization of divinylbenzene containing nitrile polymers by the incorporation of a stabilizer system comprising at least one phenolic compound, at least one epoxy stabilizer for PVC, at least one other stabilizer for PVC and preferably at least one organo-phosphite compound. This patent teaches thut such divinylbenzene containing nitrile polymers which contain the defined stabilizer system are protected against oxidation degradation and crosslinking reactions.

### Summary of the invention

According to the present invention, there is provided a crosslinked rubbery nitrile polymer containing a stabilizer system comprising at least one phenolic compound and at least one antimony containing compound. In a preferred embodiment of the invention, there is provided a crosslinked rubbery nitrile polymer containing a stabilizer system comprising at least one phenolic compound, at least one antimony containing compound and at least one organo-phosphite compound. In a further preferred embodiment of the invention there is provided a crosslinked rubbery nitrile polymer containing a stabilizer system comprising at least one phenolic compound, at least one antimony containing compound, at least one organo-phosphite compound and a di($C_{11}$—$C_{17}$ alkyl group containing carboxyl group)-thio-dipropionate.

### Detailed description and preferred embodiments

The crosslinked rubber nitrile polymers of this invention are well known in the art. They are prepared by the aqueous emulsion free radical polymerization of butadiene, acrylonitrile and divinylbenzene and contain from about 45 to about 79.5 weight percent of butadiene, from about 20 to about 50 weight percent of acrylonitrile and from about 0.5 to about 5 weight percent of divinylbenzene. A preferred crosslinked nitrile polymer contains from about 55 to about 79.5 weight percent of butadiene, from about 20 to about 40 weight percent of acrylonitrile and from about 0.5 to about 5 weight percent of divinylbenzene and a most preferred crosslinked nitrile polymer contains from about 62.5 to about 72.5 weight percent of butadiene, from about 27 to about 35 weight percent of acrylonitrile and from about 0.5 to about 2.5 weight percent of divinylbenzene. The preparation of such polymers may be as described in the article Nitrile Rubber by W. Hofmann in Rubber Chemistry and Technology, 1964, Vo., 37, pages 1—262, especially at pages 88—99. The stabilizer system of the present invention is incorporated into the nitrile polymer during the manufacture thereof, being added to the polymer latex prior to coagulation or being added partially to the polymer latex prior to coagulation and partially to the coagulated polymer during the recovery thereof.

The stabilizer system of the present invention comprises at least one phenolic compound and at least one antimony containing compound. The phenolic compounds are selected from the well known hindered phenols, that is phenols having alkyl substituents at the two carbon atoms ortho to the carbon atom having the hydroxy group attached, the alkylated bis-phenols, that is 4,4'-isopropylidene bis phenol, 2,2'-methylene bis (4-methyl phenol) 2,2'-methylene bis(2,4-dimethyl phenol), 2,2'-methylene-bis(6-tert.butyl-4-methyl phenol), 4,4'-isopropylidene-bis(2,6-di-tert. butyl phenol), 2,6-ditert. butyl-4-β-hydroxyethyl phenol, tert. butyl catechol, tert. butyl resorcinol and other like compounds known in the art, and the polymeric substituted phenols, such as the butylated reaction product of p-cresol and dicyclopentadiene. Preferred among the phenolic compounds are those having a low volatility and therefore generally having a relatively high molecular weight such as the alkylated bis phenols and the polymeric substituted phenols.

The antimony containing compounds for use in the stabilizer system of the present invention are selected from those products consisting primarily of antimony thioglycolates or mixtures of antimony and tin thioglycolates and mixtures of antimony compounds and organo-tin compounds generally described as antimony tin mercaptides and other commercially available products described as being sulphur-containing antimony compounds and believed to be antimony thioglycolate or mercaptide compounds.

2

**0 061 160**

In a preferred embodiment of the invention, the stabilizer system also contains an organo-phosphite compound. Suitable such organo-phosphite compounds include tris(nonylphenyl) phosphite, tris(octylphenyl) phosphite and the polymeric phosphite compounds which contain two phosphite groups linked by a short chain polymer, each phosphite group also being attached to two phenyl groups. Also suitable for use are tris(p-hexylphenyl) phosphite, tris(cyclohexylphenyl) phosphite and tris(p-benzylphenyl) phosphite.

In a further preferred embodiment of the invention, the stabilizer system also contains a di($C_{11}$—$C_{17}$ alkyl group substituted carboxyl group)-thio-dipropionate. Suitable such compounds include the dilauryl, dimyristyl, dipalmityl and distearyl-thio-dipropionates.

The amounts of each component in the stabilizer system are important. Based on 100 parts by weight of the crosslinked nitrile polymer, the amount of phenolic compound will be from about 1 to about 2, preferably from about 1 to about 1.5, parts by weight and the amount of antimony compound will be from about 0.3 to about 0.8, preferably from about 0.3 to about 0.6, parts by weight. When an organo-phosphite compound is present, the amount will be from about 0.3 to about 0.8, preferably from about 0.4 to about 0.6, parts by weight per 100 parts by weight of crosslinked nitrile polymer. When a di($C_{11}$—$C_{17}$ alkyl group containing carboxyl group)-thio-dipropionate is present, the amount will be from about 0.1 to about 0.4, preferably from about 0.15 to about 0.3, parts by weight per 100 parts by weight of crosslinked nitrile polymer.

The stability of the crosslinked nitrile polymer containing the present stabilizer system is readily observed when the polymer is subjected to high temperature processing as on a rubber mill or in an internal mixer at temperatures of about 150°C and higher. One method whereby the stability may be readily determined is by mixing the polymer containing stabilizers in a laboratory scale internal mixer at a temperature of 165°C, the mixing being for a time of up to 30 minutes. The torque developed on the shaft connecting the drive motor to the mixing head is measured. When the polymer is initially put into the mixer and the ram closed, there is an initial very high torque which, within about 30 seconds, drops to a stable value which then depends on the mixing time. If the polymer is not adequately stabilized against crosslinking, the torque will increase after one or two minutes of mixing time. For a very poorly stabilized polymer, this increase may continue to be seen for the full 30 minute mixing time. For a polymer having generally adequate stabilization, but inadequate for this type of use, the torque will increase, to a greater or lesser extent from the onset at 1 or 2 minutes for up to 10 minutes and then may decrease as degradation becomes predominant. For a polymer containing the stabilizer system of the present invention, the torque will show, from the 1 or 2 minute mixing time, no or very little increase but rather will tend to decrease at a slow fairly steady rate with mixing time.

Such thermal stability as described above permits the nitrile polymers containing the stabilizer system of the present invention to be used in blends with PVC and/or ABS, wherein the mixing and processing temperatures are frequently at 150°C or higher, without further extensive crosslinking of the nitrile polymer occurring. When such further crosslinking of the nitrile polymer does occur, it leads to inhomogeneous blends containing discrete particles of crosslinked nitrile polymer and the blend has inadequate strength properties and an undesirable appearance. The color of crosslinked nitrile polymers incorporating the stabilizer system as herein defined is good and the change in color which occurs on exposure to high temperature processing is minimal.

The following examples illustrate the invention. All parts are parts by weight per 100 parts by weight of crosslinked nitrile polymer.

Example 1

The base polymer used was a crosslinked nitrile polymer containing a bound acrylonitrile level of about 34 weight percents a bound butadiene level of about 65 to 65.5 weight percent and a bound divinylbenzene level of about 0.5 to 1 weight percent. Various stabilizers were incorporated into the polymer which was then masticated in a Brabender® mixer (Brabender is a registered Trademark) at a temperature of 165°C. The mixer was equipped with a roller head No. 5 or No. 6 type mixing blade and the torque was continuously measured and recorded for a total of 30 minutes. After mastication, a sample of the polymer was used to determine the Mooney (ML 1+4 @ 100°C) value. The stabilizers were incorporated into the polymer by addition of the required quantity to a latex of the polymer, following which the latex was coagulated with calcium chloride and the polymer recovered and dried.

The stabilizers used were:

Stabilizer 1—alkylated bis-phenol (Naugawhite®)
Stabilizer 2—alkyl tin mercaptide (Mark® 1900)
Stabilizer 3—antimony thioglycolate (Mark® 2115)
Stabilizer 4—organo-phosphite (Mark® C)
Stabilizer 5—antimony tin mercaptide (Mark® 9000)
Stabilizer 6—barium/cadmium carboxylate (Mark® WS)

The amounts of the stabilizers used and the results of the evaluation are shown in Table I, in which Experiments #1, 3, 5 and 6 are outside the scope of the present invention.

3

The color of the polymer before and after mastication was recorded by visual observation and these observations are given in Table I.

TABLE I

| Experiment No. | 1 | 2 | 3 | 4 | 5 | 6 |
|---|---|---|---|---|---|---|
| Stabilizer 1 | 1.25 | 1.25 | 1.25 | 1.25 | 1.25 | 1.25 |
| Stabilizer 2 | 0.5 | — | 0.5 | — | 0.5 | — |
| Stabilizer 3 | — | 0.5 | — | — | — | — |
| Stabilizer 4 | — | — | 0.5 | 0.5 | 0.5 | 0.5 |
| Stabilizer 5 | — | — | — | 0.5 | — | — |
| Stabilizer 6 | — | — | — | — | — | 0.5 |
| Mooney Before Mastication (ML 1+4 @ 100°C) | 81 | 81 | 78 | 79 | 78 | 79 |
| Color | White | White | Pale Yellow | White | White | White |
| Mastication Torque, mg/at—minutes running time | | | | | | |
| At 1 minute | 3200 | 3350 | 3100 | 3000 | 2350 | 3200 |
| 2 minutes | 2800 | 3000 | 2700 | 2650 | 2200 | 2900 |
| 3 minutes | 2550 | 2750 | 2500 | 2450 | 2100 | 2800 |
| 4 minutes | 2500 | 2600 | 2450 | 2350 | 2000 | 2700 |
| 5 minutes | 2500 | 2500 | 2300 | 2300 | 1950 | 2600 |
| 6 minutes | 2400 | 2450 | 2250 | 2200 | 1900 | 2400 |
| 8 minutes | 2200 | 2250 | 2150 | 2150 | 1850 | 2050 |
| 10 minutes | 2050 | 2050 | 2050 | 2050 | 1800 | 1900 |
| 20 minutes | 1800 | 1800 | 1850 | 1850 | 1600 | 1750 |
| 30 minutes | 1750 | 1800 | 1800 | 1800 | 1450 | 1750 |
| Mooney After Mastication (ML 1+4 @ 100°C) | 53 | 53 | 52 | 52 | 53 | 52 |
| Color | Yellow | Pale Brown | Yellow | Yellow | Yellow | Yellow |

Example 2

The base polymer used was essentially similar to that used in Example 1. The stabilizers used were as given in Example 1, except for:

Stabilizer 7—methyl tin mercaptide (ADVA STAB®TM 181)

Experiments #2 and 4 are controls and Experiments #6 and 7 are commercially available crosslinked nitrile polymers. The results are given in Table II.

TABLE II

| Experiment No. | 1 | 2 | 3 | 4 | 5 | 6 | 7 |
|---|---|---|---|---|---|---|---|
| Stabilizer 1 | 1.25 | 1.25 | 1.25 | 1.25 | 1.25 | — | — |
| Stabilizer 3 | 0.5 | — | — | — | 0.5 | — | — |
| Stabilizer 4 | — | — | 0.5 | 0.5 | 0.5 | — | — |
| Stabilizer 5 | — | — | 0.5 | — | — | — | — |
| Stabilizer 7 | — | 0.5 | — | 0.5 | — | — | — |
| Mooney Before Mastication (ML 1+4 @ 100°C) | 79 | 80 | 79 | 81 | 77 | 109 | 115 |
| Color | Pale Yellow | White | Pale Yellow | Pale Yellow | Light Brown | White | White |
| Mastication Torque, mg/at—minutes running time | | | | | | | |
| At 1 minute | 3250 | 3100 | 3050 | 3100 | 2900 | 3900 | 3800 |
| 2 minutes | 2800 | 2650 | 2600 | 2650 | 2550 | 3250 | 3300 |
| 3 minutes | 2700 | 2450 | 2500 | 2500 | 2400 | 3150 | 3100 |
| 4 minutes | 2550 | 2400 | 2350 | 2350 | 2250 | 3150 | 3000 |
| 5 minutes | 2350 | 2350 | 2250 | 2250 | 2150 | 3150 | 2950 |
| 6 minutes | 2250 | 2250 | 2150 | 2150 | 2000 | 3100 | 2900 |
| 8 minutes | 2000 | 2000 | 1950 | 1950 | 1800 | 3050 | 2850 |
| 10 minutes | 1900 | 1900 | 1850 | 1850 | 1750 | 3000 | 2750 |
| 20 minutes | 1800 | 1750 | 1750 | 1700 | 1600 | 2900 | 2650 |
| 30 minutes | 1750 | 1700 | 1700 | 1650 | 1550 | 2800 | 2600 |
| Mooney After Mastication (ML 1+4 @ 100°C) | 55 | 56 | 52 | 53 | 53 | 96 | 82 |
| Color | Light Brown | Light Brown | Light Brown | Yellow Brown | Grey Brown | Light Brown | Yellow |

Example 3

The base polymer used was the same as that used for Example 1. The stabilizers used were as given in Example 1, except for:

Stabilizer 8—antimony thioglycolate (Thermolite® 170)
Stabilizer 9—polymeric substituted phenol (Wingstay® L)

No controls were included in this Example. The stabilization systems used and the results obtained are given in Table III.

TABLE III

| Experiment # | ·1 | ·2 | ·3 |
|---|---|---|---|
| Stabilizer 1 | 1.25 | 1.25 | — |
| Stabilizer 8 | 0.5 | 0.5 | 0.5 |
| Stabilizer 4 | — | 0.5 | 0.5 |
| Stabilizer 9 | — | — | 1.25 |
| Mooney Before Mastication (ML 1+4 @ 100°C) | 80 | 79 | 83 |
| Color | White | White | White |
| Mastication Torque, mg/at—minutes running time | | | |
| At 1 minute | 3500 | 3000 | 3000 |
| 2 minutes | 2900 | 2550 | 2650 |
| 3 minutes | 2700 | 2500 | 2600 |
| 4 minutes | 2600 | 2400 | 2550 |
| 5 minutes | 2500 | 2350 | 2450 |
| 6 minutes | 2300 | 2200 | 2300 |
| 8 minutes | 2100 | 2050 | 2050 |
| 10 minutes | 2000 | 1950 | 1950 |
| 20 minutes | 1850 | 1850 | 1800 |
| 30 minutes | 1800 | 1800 | 1800 |
| Mooney After Mastication (ML 1+4 @ 100°C) | 58 | 55 | 57 |
| Color | Very Pale Yellow | Very Pale Yellow | Very Light Brown |

Example 4

The base polymer used was essentially similar to that of Example 1. The stabilizers that were added to the polymer were:

Stabilizer 10—antimony thioglycolate (Mark 2115D®)
Stabilizer 9—polymeric substituted phenol (Wingstay® L)
Stabilizer 11—dilauryldithiopropionate
Stabilizer 12—polymeric organo phosphite (Wytox® 345)

Experiment #1 is within the scope of the present invention and Experiments #2 and 3 are outside the scope of the invention by virtue of not containing one of or too low a level of the specified stabilizers. The quantities and types of stabilizers used and the results obtained are given in Table IV.

TABLE IV

| Experiment # | 1 | 2 | 3 |
|---|---|---|---|
| Stabilizer 9 | 1.25 | 1.0 | 0.75 |
| Stabilizer 10 | 0.375 | — | 0.375 |
| Stabilizer 11 | 0.2 | 0.4 | 0.5 |
| Stabilizer 12 | 0.5 | 0.5 | — |
| Mooney Before Mastication (ML 1+4 @ 100°C) | 94 | 111 | 102 |
| Color | White | White | White |
| Mastication Torque, mg/at—minutes running time | | | |
| At 1 minute | 4000 | 3750 | 3650 |
| 2 minutes | 3000 | 3350 | 2950 |
| 3 minutes | 2800 | 3550 | 2850 |
| 4 minutes | 2750 | 3700 | 3050 |
| 5 minutes | 2850 | 3650 | 3100 |
| 6 minutes | 3000 | 3450 | 3100 |
| 8 minutes | 2900 | 3100 | 2950 |
| 10 minutes | 2750 | 3000 | 2850 |
| 20 minutes | 2600 | 3050 | 2800 |
| 30 minutes | 2750 | 3050 | 2900 |
| Mooney After Mastication (ML 1+4 @ 100°C) | 94 | 133.5 | 107.5 |
| Color | Very Pale Yellow | Yellow Brown | Pale Yellow |

**Claims**

1. A crosslinked rubbery nitrile polymer containing a stabilizer system, said nitrile polymer containing from about 45 to about 79.5 weight percent of butadiene, from about 20 to about 50 weight per cent of acrylonitrile and from about 0.5 to about 5 weight percent of divinylbenzene, characterized in that said stabilizer system comprises from about 1 to about 2 parts by weight per 100 parts by weight of polymer of at least one phenolic compound selected from hindered phenols, alkylated bis-phenol and polymeric substituted phenols, and from about 0.3 to about 0.8 parts by weight per 100 parts by weight of polymer of at least one antimony-containing compound selected from antimony thioglycolates, mixtures of antimony and tin thioglycolates, antimony tin mercaptides and antimony mercaptide compounds.

2. The nitrile polymer of Claim 1 characterized in that said stabilizer system also contains an organophosphite compound.

3. The nitrile polymer of Claim 2 characterized in that said organo-phosphite compound is selected from tris(nonylphenyl) phosphite, tris(octylphenyl) phosphite, tris(p-hexylphenyl) phosphite, tris(cyclohexylphenyl) phosphite, tris(p-benzylphenyl) phosphite and polymeric phosphite compounds which contain two phosphite groups linked by a short chain polymer and each phosphite group also being attached to two phenyl groups.

4. The nitrile polymer of Claim 2 characterized in that said stabilizer system also contains a di($C_{11}$—$C_{17}$ alkyl group substituted carboxyl-group)-thio-dipropionate.

5. The nitrile polymer of Claim 4 characterized in that said di($C_{11}$—$C_{17}$ alkyl group substituted carboxyl group)-thio-dipropionate is selected from dilauryl-thio-dipropionate, dimyristyl-thio-dipropionate, dipalmityl-thio-dipropionate and distearyl-thio-dipropionate.

6. The nitrile polymer of Claim 1 wherein said nitrile polymer contains from about 55 to about 79.5 weight percent of butadiene, from about 20 to about 40 weight percent of acrylonitrile and from about 0.5 to about 5 weight per cent of divinylbenzene, characterized in that said stabilizer system comprises, per 100 parts by weight of polymer, from about 1 to about 1.5 parts by weight of a phenolic compound selected from hindered phenols, alkylated bis-phenols and polymeric substituted phenols, from about 0.3 to about 0.6 parts by weight of an antimony-containing compound selected from antimony thioglycolates, mixtures of antimony and thin thioglycolates, antimony tin mercaptides and antimony mercaptide compounds, and from about 0.4 to about 0.6 parts by weight of an organo-phosphite compound selected from tris(nonylphenyl) phosphite, tris(octylphenyl) phosphite, tris(p-hexylphenyl) phosphite, tris(cyclohexylphenyl) phospite, tris(p-benzylphenyl) phosphite and polymeric phosphite compounds which contain two phosphite groups linked by a short chain polymer and each phosphite group also being attached to two phenyl groups.

7. The nitrile polymer of Claim 6 characterized in that said stabilizer system also contains, per 100 parts by weight of polymer, from about 0.1 to about 0.4 parts by weight of a di($C_{11}$—$C_{17}$ alkyl group substituted carboxyl group)-thio-dipropionate selected from dilauryl-thio-dipropionate, dimyristyl-thio-dipropionate, dipalmityl-thio-dipropionate and distearyl-thio-dipropionate.

## Patentansprüche

1. Vernetztes kautschukartiges Nitrilpolymeres, das ein Stabilisierungssystem enthält, wobei das Nitrilpolymere ungefähr 45 bis ungefähr 79,5 Gew.-% Butadien, ungefähr 20 bis ungefähr 50 Gew.-% Acrylnitril und ungefähr 0,5 bis ungefähr 5 Gew.-% Divinylbenzol enthält, dadurch gekennzeichnet, daß das Stabilisierungssystem aus ungefähr 1 bis ungefähr 2 Gewichtsteilen pro 100 Gewichsteilen des Polymeren wenigstens einer phenolischen Verbindung, ausgewählt aus behinderten Phenolen, alkyliertem bis-Phenol und polymeren substituierten Phenolen, und ungefähr 0,3 bis ungefähr 0,8 Gew.-Teilen pro 100 Gewichtsteilen des Polymeren, wenigstens einer Antimonen enthaltenden Verbindung, ausgewählt aus Antimonthioglycolat, Mischungen aus Antimon- und Zinnthioglycolaten, Antimon/Zinn-Mecaptiden und Antimonmercaptidverbindungen, besteht.

2. Nitrilpolymeres nach Anspruch 1, dadurch gekennzeichnet, daß das Stabilisierungssystem auch eine Organophosphitverbindung enthält.

3. Nitrilpolymeres nach Anspruch 2, dadurch gekennzeichnet, daß die Organophosphitverbindung aus tris(Nonylphenyl)phosphit, tris(Octylphenyl)phosphit, tris(p-Hexylphenyl)phosphit, tris(Cyclohexylphenyl) phosphit, tris(p-Benzylphenyl)phosphit und polymeren Phosphitverbindungen ausgewählt ist, die zwei Phosphitgruppen enthalten, die über ein kurzkettiges Polymers verknüpft sind, wobei jede Phosphitgruppe auch mit zwei Phenylgruppen verknüpft ist.

4. Nitrilpolymeres nach Anspruch 2, dadurch gekennzeichnet, daß das Stabilisierungssystem auch ein di($C_{11}$—$C_{17}$-Alkylgruppen-subst.-carboxylgruppe)-thio-dipropionate enthält.

5. Nitrilpolymeres nach Anspruch 4, dadurch gekennzeichnet, daß das di($C_{11}$—$C_{17}$-Alkyl-gruppen-subst.-Carboxylgruppe)-thio-dipropionat aus Dilauryl-thio-dipropionat, Dimyristyl-thio-dipropionat, Dipalmityl-thio-dipropionat sowie Distearyl-thio-dipropionat ausgewählt ist.

6. Nitrilpolymeres nach Anspruch 1 wobei das Nitrilpolymere ungefähr 55 bis ungefähr 79,5 Gew.-% Butadien, ungefähr 20 bis ungefähr 40 Gew.-% Acrylnitril und ungefähr 0,5 bis ungefähr 5 Gew.-% Divinylbenzol enthält, dadurch gekennzeichnet, daß das Stabilisierungssystem, bezogen auf 100 Gew.-Teile des Polymeren, aus ungefähr 1 bis ungefähr 1,5 Gew.-Teilen einer Phenolverbindung, ausgewählt aus behinderten Phenolen, alkylierten bis-Phenolen und polymeren substituierten Phenolen, ungefähr 0,3 bis ungefähr 0,6 Gew.-Teilen einer Antimon enthaltenden Verbindung, ausgewählt aus Antimon-thio-glycolaten, Mischungen aus Antimon- und Zinn-thio-glycolaten, Antimon/Zinn-Mercaptiden und Antimonmercaptidverbindungen, und ungefähr 0,4 bis ungefähr 0,6 Gew.-Teilen einer Organophosphitverbindung, ausgewählt aus tris(Nonylphenyl)phosphit, tris(Octylphenyl)phosphit, tris(p-Hexylphenyl)-phosphit, tris(Cyclohexylphenyl)phosphit, tris(p-Benzylphenyl)phosphit und polymeren Phosphitverbindungen, welche zwei Phosphitgruppen enthalten, die über ein kurzkettiges Polymeres verbunden sind, und wobei jede Phosphitgruppe auch mit zwei Phenylgruppen verknüpft ist, besteht.

7. Nitrilpolymeres nach Anspruch 6, dadurch gekennzeichnet, daß das Stabilisierungssystem auch, bezogen auf 100 Gew.-Teile des Polymeren ungefähr 0,1 bis ungefähr 0,4 Gew.-Teile eines di($C_{11}$—$C_{17}$-Alkylgruppen-subst.-carboxylgruppe)-thio-dipropionat enthält, ausgewählt aus Dilauryl-thio-dipropionat, Dimyristyl-thio-dipropionat, Dipalmityl-thio-dipropionat sowie Distearyl-thio-dipropionat.

## Revendications

1. Polymère nitrilique du genre caoutchouc réticulé, contenant un système stabilisant, ledit polymère nitrilique renfermant environ 45 à environ 79,5% en poids de butadiène, environ 20 à environ 50% en poids d'acrylonitrile et environ 0,5 à environ 5% en poids de divinylbenzène, caractérisé en ce que le système

8

stabilisant comprend environ 1 à environ 2 parties en poids, pour 100 parties en poids de polymère, d'au moins un composé phénolique choisi entre des phénols à encombrement stérique, un bisphénol alkylé et des phénols polymériques substitués, et environ 0,3 à environ 0,8 partie en poids, pour 100 parties en poids de polymère, d'au moins un composé contenant de l'antimoine choisi entre des thioglycolates d'antimoine, des mélanges de thioglycolates d'antimoine et d'étain, des mercaptides d'antimoine et d'étain et des composés mercaptidiques d'antimoine.

2. Polymère nitrilique suivant la revendication 1, caractérisé en ce que le système stabilisant contient également un composé organophosphitique.

3. Polymère nitrilique suivant la revendication 2, caractérisé en ce que ledit composé organophosphitique est choisi entre le phosphite de tris(nonylphényle), le phosphite de tris(octylphényle), le phosphite de tris(p-hexylphényle), le phosphite de tris(cyclohexylphényle), le phosphite de tris(p-benzylphényle) et des composés phosphitiques polymériques qui contiennent deux groupes phosphite liés par un polymère à chaîne courte et dont chacun est également attaché à deux groupes phényle.

4. Polymère nitrilique suivant la revendication 2, caractérisé en ce que le système stabilisant contient également un thiodipropionate de di-(groupe carboxyle substitué par un groupe alkyle en $C_{11}$ à $C_{17}$).

5. Polymère nitrilique suivant la revendication 4, caractérisé en ce que le thiodipropionate de di-(groupe carboxyle substitué par un groupe alkyle en $C_{11}$ à $C_{17}$) est choisi entre le thiodipropionate de dilauryle, le thiodipropionate de dimyristyle, le thiodipropionate de dipalmityle et le thiodipropionate de distéaryle.

6. Polymère nitrilique suivant la revendication 1, dans lequel ledit polymère nitrilique contient environ 55 à environ 79,5% en poids de butadiène, environ 20 à environ 40% en poids d'acrylonitrile et environ 0,5 à environ 5% en poids de divinylbenzène, caractérisé en ce que le système stabilisant comprend, pour 100 parties en poids de polymère, environ 1 à environ 1,5 partie en poids d'un composé phénolique choisi entre des phénols à empêchement stérique, des bisphénols alkylés et des phénols polymériques substitués, environ 0,3 à environ 0,6 partie en poids d'un composé contenant de l'antimoine chois entre des thioglycolates d'antimoine, des mélanges de thioglycolates d'antimoine et d'étain, des mercaptides d'antimoine et d'étain et des composées mercaptidiques d'antimoine, et environ 0,4 à environ 0,6 partie en poids d'un composé organophosphitique choisi entre le phosphite de tris(nonylphényle), le phosphite de tris(octylphényle), le phosphite de tris(p-hexylphényle), le phosphite de tris(cyclohexylphényle), le phosphite des tris(p-benzylphényle) et des composés phosphitiques polymériques qui contiennent deux groupes phosphite liés par un polymère à chaîne courte et également attachés chacun à deux groupes phényle.

7. Polymère nitrilique suivant la revendication 6, caractérisé en ce que le système stabilisant contient aussi, pour 100 parties en poids de polymère, environ 0,1 à environ 0,4 partie en poids d'un thiodipropionate de di(groupe carboxyle substitué par un groupe alkyle en $C_{11}$ à $C_{17}$) choisi entre le thiodipropionate de dilauryle, le thiodipropionate de dimyristyle, le thiodipropionate de dipalmityle et le thiodipropionate de distéaryle.